(19) Europäisches Patentamt

European Patent Office

Office européen des brevets

(11) Veröffentlichungsnummer: **0 291 847 B1**

(12) **EUROPÄISCHE PATENTSCHRIFT**

(45) Veröffentlichungstag der Patentschrift: **30.12.92**

(21) Anmeldenummer: **88107587.3**

(22) Anmeldetag: **11.05.88**

(51) Int. Cl.⁵: **G11B 11/10**, G11B 5/72

(54) **Flächenförmiges, mehrschichtiges, magneto-optisches Aufzeichnungsmaterial.**

(30) Priorität: **19.05.87 DE 3716736**

(43) Veröffentlichungstag der Anmeldung:
**23.11.88 Patentblatt 88/47**

(45) Bekanntmachung des Hinweises auf die
Patenterteilung:
**30.12.92 Patentblatt 92/53**

(84) Benannte Vertragsstaaten:
**BE DE FR GB IT NL**

(56) Entgegenhaltungen:
**US-A- 4 579 777**

(73) Patentinhaber: **BASF Aktiengesellschaft**
**Carl-Bosch-Strasse 38**
**W-6700 Ludwigshafen(DE)**

(72) Erfinder: **Steininger, Helmut, Dr.**
**Dr.-Ernst-Kilb-Weg 15**
**W-6520 Worms 26(DE)**

**Beschreibung**

Die Erfindung betrifft ein neues, flächenförmiges, mehrschichtiges, magneto-optisches Aufzeichnungsmaterial, welches einen lichtdurchlässigen Träger, eine thermisch veränderbare Aufzeichnungsschicht aus einer amorphen Lanthanid-Übergangsmetall-Legierung und auf der dem Träger abgewandten Seite dieser Aufzeichnungsschicht eine Carbide, Nitride und/oder Oxide enthaltende Antikorrosionsschicht aufweist.

Aufzeichnungsmaterialien dieser Art sind z. B. aus der DE-A-33 35 689 bekannt. Darin ist die Aufzeichnungsschicht 20 bis 100 nm dick. Auf ihrer dem Träger abgewandten Seite weist sie drei Schichten auf, von denen jede einzelne eine definierte Funktion erfüllt. So besteht die erste Schicht aus einem Material mit hohem Brechungsindex von 2,0 und mehr, wie etwa Titan-, Cer-, Antimon-, Wolfram-, Silizium-, Wismut- oder Cadmiumoxid, und dient als Interferenz-Film. Die zweite Schicht besteht aus Metallen wie Kupfer, Silber, Chrom, Aluminium, Rhodium, Gold oder Nickel und stellt eine Reflexionsschicht dar. Die oberste Schicht ist eine Antioxidationsschicht und besteht aus Magnesium-, Aluminium-, Silizium-, Titan- oder Thoriumoxid.

Einen vergleichbaren Aufbau weisen die aus der DE-A-35 34 571 bekannten Aufzeichnungsmaterialien auf. Bei diesen besteht die erste der auf der Aufzeichnungsschicht aufgebrachten Schichten aus einem Gemisch aus Siliziumcarbid und -nitrid oder Siliziumcarbid und Aluminiumnitrid und dient sowohl als Schutzschicht als auch als Interferenzschicht. Als zweite Schicht ist eine reflektierende Schicht aus einem Metall wie Kupfer, Aluminium oder Gold vorgesehen. Darüber kann eine Antikorrosionsschicht angeordnet sein. Das Aufzeichnungsmaterial kann weitere Hilfsschichten, wie eine Interferenzschicht aus Siliziummonoxid, Magnesiumfluorid oder Niob-, Tantal- oder Aluminiumoxid oder Aluminium- oder Siliziumnitrid, enthalten.

Darüber hinaus geht aus der DE-A-35 00 314 ein Aufzeichnungsmaterial mit einer sowohl als Antikorrosionsschicht als auch als Interferenzfilm dienenden Schicht aus einem Oxid-Nitrid-Gemisch hervor.

Aus der US-A 4,579,777 ist ein magneto-optisches Aufzeichnungsmaterial bekannt, dessen Antikorrosionsschicht eine Gesamtdicke von 43 bis 155 nm hat und aus 2 oder mehr Komponenten besteht, wobei mindestens eine der Komponenten aus Al, Si, Ti und Cr besteht und die andere Komponente aus Nitriden und Oxiden.

Diese bekannten Aufzeichnungsmaterialien dienen dem Aufzeichnen und Lesen von Daten mit Hilfe impulskodierter Laserstrahlen, welche auf die Aufzeichnungsschichten fokussiert sind und senkrecht auf diese auftreffen.

Beim Aufzeichnen oder Schreiben von Daten wird an die Aufzeichnungsmaterialien ein magnetisches Hilfsfeld angelegt, dessen Feldlinien senkrecht zur Oberfläche der Aufzeichnungsschichten ausgerichtet sind.

Bekanntermaßen werden die aus den amorphen, ferrimagnetischen Lanthanid-Übergangsmetall-Legierungen bestehenden, senkrecht zu ihrer Oberfläche magnetisierten Aufzeichnungsschichten beim Einschreiben der Daten durch den Laserstrahl in der Auftreffstelle erwärmt. Durch die Erwärmung nimmt die Koerzitivfeldstärke $H_c$ der Legierungen ab. Unterschreitet die Koerzitivfeldstärke $H_c$ bei einer von der jeweils verwendeten Legierung abhängigen kritischen Temperatur die Feldstärke des anliegenden magnetischen Hilfsfeldes, so entsteht in der Auftreffstelle ein Bereich, der eine der ursprünglichen Richtung entgegengesetzte Magnetisierungsrichtung aufweist. Ein solcher Bereich wird auch als "spot" bezeichnet.

Für das Lesen der Daten verwendet man linear polarisiertes Licht eines kontinuierlich emittierenden Dauerstrichlasers, dessen Lichtleistung nicht dazu ausreicht, das Material über die kritische Temperatur zu erwärmen. Dieser Laserstrahl wird entweder von der Aufzeichnungsschicht selbst oder von einer hinter ihr angeordneten Reflexionsschicht reflektiert, wobei es zu einer Wechselwirkung zwischen den magnetischen Momenten in der Aufzeichnungsschicht und dem magnetischen Vektor der Laserlichtwelle kommt. Durch diese Wechselwirkung wird die Ebene der Polarisation $\vec{E}$ des Laserlichts, welches von einem "spot" oder von einer dahinter liegenden Reflexionsschicht reflektiert wird, gegenüber der ursprünglichen Ebene um einen kleinen Winkel gedreht. Geschieht diese Drehung der Ebene der Polarisation $\vec{E}$ bei der Reflexion des Lichts an der Aufzeichnungsschicht selbst, so bezeichnet man dies als Kerr-Effekt und den Drehwinkel demnach als Kerr-Drehwinkel; wird dagegen die Ebene beim zweimaligen Durchgang des Lichts durch die Aufzeichnungsschicht gedreht, so spricht man vom Faraday-Effekt und vom Faraday-Drehwinkel.

Diese Drehung der Ebene der Polarisation $\vec{E}$ des vom Aufzeichnungsmaterial reflektierten Laserlichts kann mit Hilfe geeigneter optischer und elektronischer Geräte gemessen und in Signale umgesetzt werden.

Wenn bei den bekannten Aufzeichnungsmaterialien der Faraday-Effekt ausgenutzt wird, so müssen diese notwendigerweise eine Reflexionsschicht enthalten, da die Aufzeichnungsschichten als solche lichtdurchlässig sind. Überdies müssen Interferenzschichten vorhanden sein, um störende Beugungserscheinungen an der Grenzfläche zwischen der Reflexionsschicht und der Aufzeichnungsschicht zu verhindern.

Natürlich wirken solche Schichten auch als Sauerstoffsperren, welche in gewissem Umfang verhindern, daß die äußerst sauerstoff- und wasserempfindliche Aufzeichnungsschicht korrodiert. Sie erfüllen diese Funktion indes nicht in einem für die Praxis ausreichendem Maß, so daß zusätzlich noch Antikorrosionsschichten mitverwendet werden müssen, welche das Aufzeichnungsmaterial gegen die Luft hin abschließen.

Die bekannte Kombination aus einem Interferenzfilm, einer Reflexionsschicht und einer Antioxidationsschicht ist nicht als eine einzige, aus mehreren separaten Lagen zusammengesetzte Antikorrosionsschicht aufzufassen, weil ihr Aufbau und ihre Zusammensetzung in der Hauptsache von den anderen Funktionen bestimmt werden.

Hinsichtlich der Antikorrosionswirkung weist die bekannte Kombination Nachteile auf. Insbesondere läßt ihre Wirkung als Sauerstoffsperre zu wünschen übrig, sofern sie nicht auf der Luftseite eine vergleichsweise dicke Schicht aus beispielsweise Aluminiumoxid enthält. Außerdem ergeben sich aus der nach anderen Gesichtspunkten getroffenen Auswahl der Komponenten der übrigen Schichten Nachteile hinsichtlich der Haftung der Schichten aufeinander, der Haltbarkeit, der inneren Spannung oder der mechanischen Festigkeit. So kann eine bekannte Kombination, welche hinsichtlich der Interferenz und Reflexion optimal sein mag, eine geringe Antikorrosionswirkung aufweisen. Oder aber ihre Antikorrosionswirkung ist zwar befriedigend, indessen läßt ihre Haltbarkeit zu wünschen übrig. Wählt man dann Komponenten, welche eine besonders harte obere Schicht liefern, kann die bekannte Schichtkombination insgesamt so spröde werden, daß sie bei geringer mechanischer Beanspruchung zerspringt. Überdies können innere Spannungen darin Risse hervorrufen. All dies ist der Antikorrosionsschutzwirkung abträglich.

Der Schutz vor Korrosion ist jedoch gerade bei den in Rede stehenden Aufzeichnungsmaterialien von grundlegender Bedeutung, weil deren Aufzeichnungsschichten äußerst schnell durch Wasser und/oder Luftsauerstoff zerstört werden, was einen Totalverlust der darin eingeschriebenen Daten zur Folge hat.

Aufgabe der vorliegenden Erfindung ist es, ein neues, flächenförmiges, mehrschichtiges, magneto-optisches Aufzeichnungsmaterial zu finden, welches einen lichtdurchlässigen Träger, eine thermisch veränderbare Aufzeichnungsschicht aus einer amorphen Lanthanid-Übergangsmetall-Legierung und auf der dem Träger abgewandten Seite dieser Aufzeichungsschicht eine Carbide, Nitride und/oder Oxide enthaltende Antikorrosionsschicht aufweist und welches die Nachteile der bekannten Aufzeichnungsmaterialien nicht länger zeigt.

Erfindungsgemäß wird diese Aufgabe durch ein neues, flächenförmiges, mehrschichtiges, magneto-optisches Aufzeichnungsmaterial gelöst, welches einen lichtdurchlässigen Träger, eine thermisch veränderbare Aufzeichnungsschicht aus einer amorphen Lanthanid-Übergangsmetall-Legierung und auf der dem Träger abgewandten Seite dieser Aufzeichnungsschicht eine Antikorrosionsschicht aufweist, die

a) 30 bis 250 nm dick ist und

b) aus zwei oder mehr Komponenten besteht, welche

c) in vier oder mehr separaten Lagen aus jeweils einer der Komponenten vorliegen, wobei

d) mindestens eine der Komponenten aus der Gruppe der Elemente Bor, Aluminium, Silizium, Titan, Zirkon, Hafnium, Vanadin, Niob, Tantal, Chrom, Molybdän und Wolfram und

e) mindestens eine andere der Komponenten aus der Gruppe der Carbide, Nitride und Oxide dieser Elemente (d) ausgewählt ist und wobei

f) direkt benachbarte Lagen stets aus voneinander verschiedenen Komponenten bestehen und sich zwischen den Lagen eine Übergangszone befindet, in der sich die Zusammensetzung der einen Lage allmählich in die Zusammensetzung der anderen Lage ändert.

Die erfindungsgemäß zu verwendenden, mehrlagigen, Carbide, Nitride und/oder Oxide sowie Elemente enthaltenden Schichten dienen ausschließlich dem Schutz der Aufzeichnungsschichten der erfindungsgemäßen, flächenförmigen, mehrschichtigen, magneto-optischen Aufzeichnungsmaterialien vor Korrosion. Sie werden daher als Antikorrosionsschicht bezeichnet.

Unter dem Begriff "flächenförmig" werden alle Raumformen zusammengefaßt, deren Dicke erheblich geringer ist als ihre Länge und Breite. Die erfindungsgemäßen Aufzeichnungsmaterialien können demnach band-, platten- oder scheibenförmig sein, wobei die scheibenförmigen - welche im allgemeinen als "Datenplatten" oder "Disks" bezeichnet werden - von Vorteil sind.

Durch den Begriff "mehrschichtig" wird darauf verwiesen, daß das erfindungsgemäße Aufzeichnungsmaterial aus dem Träger, der Aufzeichnungsschicht und der mehrlagigen Antikorrosionsschicht sowie gegebenenfalls weiteren Schichten, welche gleichfalls der Funktion des Aufzeichnungsmaterials dienlich sind, aufgebaut ist.

Die erfindungsgemäß anzuwendenden Antikorrosionsschichten sind bis zu 250 nm dick. Wegen ihrer besonderen Eigenschaften erübrigen sich höhere Schichtdicken. Überdies sind mit dem hierfür notwendigen höheren Materialverbrauch keine weiteren besonderen Vorteile verbunden. Die Dicke der erfindungsgemäßen Antikorrosionsschichten soll 30 nm nicht unterschreiten, weil dann ihre Sperrwirkung gegenüber Sauerstoff und Wasser nicht mehr in vollem Umfang befriedigt. Von Vorteil sind Dicken von 50 bis 100 nm. In diesem Dickenbereich weisen die erfindungsgemäßen Antikorrosionsschichten hinsichtlich der Sperrwirkung, des Materialverbrauchs, des Herstellaufwandes, der mechanischen Festigkeit, Zähigkeit und Haltbarkeit ein optimales Eigenschaftsprofil auf.

Die erfindungsgemäß anzuwendenden Antikorrosionsschichten bestehen aus vier oder mehr separaten Lagen zweier oder mehr Komponenten.

In den allermeisten Fällen genügen vier oder fünf separate Lagen für die Einstellung eines optimalen Eigenschaftsprofils, in besonderen Fällen werden Antikorrosionsschichten aus sechs, sieben oder acht Lagen verwendet. Antikorrosionsschichten aus neun, zehn oder mehr Lagen werden seltener angewendet, weil hierbei der höhere Herstellaufwand nicht durch eine weitere Steigerung der an sich schon besonders vorteilhaften Eigenschaften gerechtfertigt wird. Von besonderem Vorteil sind daher Antikorrosionsschichten aus vier oder fünf Lagen, weil sie mit dem geringsten Aufwand herzustellen sind und dabei bereits optimale Eigenschaften aufweisen.

Die Lagen der erfindungsgemäßen Antikorrosionsschichten können unterschiedliche Dicken aufweisen. Von Vorteil ist es indes, wenn sie von in etwa gleicher Dicke sind.

Jede separate Lage besteht stets aus einer Komponente, wobei die Komponenten benachbarter Lagen stets voneinader verschieden sind. Insgesamt reichen bereits zwei Komponenten für den Aufbau der Antikorrosionsschicht und für die Einstellung der gewünschten vorteilhaften Eigenschaften aus. Erfindungsgemäß von Vorteil sind indes drei Komponenten, weil sich hiermit bei vergleichsweise geringem Herstellaufwand das Eigenschaftsprofil am besten optimieren läßt. Vier, fünf oder sechs Komponenten werden seltener angewendet, weil sich dadurch nur noch eine vergleichsweise geringe Steigerung der vorteilhaften Eigenschaften ergibt.

Der Übergang von einer Lage zur nächsten ist fließend, d.h., daß sich zwischen den Lagen anstelle einer scharfen Grenzfläche eine mehr oder weniger breite Übergangszone befindet. So kann z.B. eine stöchiometrisch zusammengesetzte Carbid-, Nitrid- oder Oxidlage über eine Zone substöchiometrischer Zusammensetzung, in welcher die Konzentration des Kohlenstoffs, Stickstoffs oder Sauerstoffs mehr oder weniger rasch abnimmt und die Metallkonzentration mehr oder weniger rasch zunimmt, in eine reine Metallage übergehen. Ebenso Können beispielsweise Oxidlagen allmählich in Carbid- oder Nitridlagen übergehen.

Erfindungsgemäß von besonderem Vorteil ist, wenn die Oxid-, Carbid- oder Nitridlagen in Metallagen übergehen und die Metallagen in entsprechender Weise in Oxid-, Carbid- oder Nitridlagen.

Als theoretische Grenzfläche zwischen zwei allmählich ineinander übergehenden Lagen wird diejenige Ebene in der Übergangszone angenommen, bei welcher der Kohlenstoff-, Stickstoff- oder Sauerstoffgehalt einer Carbid-, Nitrid- oder Oxidlage gerade 50 % des entsprechend stöchiometrischen Werts erreicht. Die Dicke einer solchen Lage reicht daher von einer theoretischen Grenzfläche zur nächsten.

Als die Dicke einer Übergangszone wird die Strecke von der Ebene, bei welcher der Kohlenstoff-, Stickstoff- oder Sauerstoffgehalt einer Carbid-, Nitrid- oder Oxidschicht gerade 90 % des stöchiometrischen Wertes erreicht, bis zur Ebene, in welcher dieser Wert gerade 10 % ausmacht, angesehen. Die beiden Anteile einer Überangszone in zwei Lagen können unterschiedlich dick sein. Die Dicke eines solchen Anteils in einer Lage soll nicht mehr als 75 %, vorzugsweise 50 %, vorteilhafterweise 30 % und insbesondere 10 % der Lagendicke ausmachen.

Die oberste Lage der erfindungsgemäß anzuwendenden Antikorrosionsschichten kann eine Carbid-, Nitrid-, Oxid- oder Elementlage sein. Von Vorteil sind die Carbid-, Nitrid- oder Oxidlagen, wobei die Oxidlagen von besonderem Vorteil sind. Hierbei ist von ganz besonderem Vorteil, wenn die Lage unterhalb der Oxidlage eine Elementlage ist.

Die Komponenten der Antikorrosionsschichten werden stets aus zwei Gruppen ausgewählt, von denen die eine Gruppe aus den Elementen Bor, Aluminium, Silizium, Titan, Zirkon, Hafnium, Vanadin, Niob, Tantal, Chrom, Molybdän und Wolfram und die andere Gruppe aus den Carbiden, Nitriden und Oxiden dieser Elemente - namentlich Bor-, Aluminium-, Silizium-, Titan-, Zirkon-, Hafnium-, Vanadin-, Niob-, Tantal-, Chrom-, Molybdän- und Wolframcarbid, Bor-, Aluminium-, Silizium-, Titan-, Zirkon-, Hafnium-, Vanadin-, Niob-, Tantal-, Chrom-, Molybdän- und Wolframnitrid sowie Bor-, Aluminium-, Silizium-, Titan-, Zirkon-, Hafnium-, Vanadin-, Niob-, Tantal-, Chrom-, Molybdän- und Wolframoxid - besteht. Dabei können für den Aufbau der Antikorrosionsschicht ein bestimmtes Element oder zwei und mehr bestimmte Elemente sowie die Carbide, Nitride oder Oxide des gleichen oder anderer Elemente ausgewählt werden. Von Vorteil ist es, nur ein Element zu verwenden, wobei es dann von besonderem Vorteil ist die Carbide, Nitride und/oder Oxide dieses einen Elementes anzuwenden.

Vorteilhafte erfindungsgemäß zu verwendende Antikorrosionsschichten enthalten als Komponenten Aluminium, Silizium oder Titan sowie Bor-, Aluminium-, Silizium- oder Titancarbid, Bor-, Aluminium-, Silizium- oder Titannitrid oder Aluminium-, Silizium- oder Titanoxid.

Besonders vorteilhafte Antikorrosionsschichten bestehen aus Aluminium, Silizium oder Titan sowie Aluminium-, Silizium- oder Titancarbid oder Aluminium-, Silizium- oder Titannitrid und Aluminium-, Silizium- oder Titanoxid.

Ganz besonders vorteilhafte Antikorrosionsschichten bestehen aus Aluminium, Aluminiumnitrid und Aluminiumoxid oder aus Silizium, Siliziumcarbid und/oder Siliziumnitrid sowie Siliziumoxid.

Die Herstellung der erfindungsgemäß zu verwendenden Antikorrosionsschichten kann nach den üblichen und bekannten Techniken der Herstellung dünner Schichten durch Aufdampfen, reaktives Aufdampfen, Ionenplattieren (Ionplating), "ion cluster beam deposition" (ICB) oder Kathodenzerstäubung, inklusive reaktiver Kathodenzerstäubung, erfolgen. Vorzugsweise wird die Kathodenzerstäubung ("sputtering") angewendet. Hierzu kann man in bekannter Weise die entsprechenden Metalle, Oxide, Nitride und/oder Carbide in reiner Form in der gewünschten Reihenfolge und Menge im Hochvakuum von einem sogenannten "target" aus zerstäuben und auf geeigneten Trägern oder bereits darauf befindlichen Schichten niederschlagen. Oder aber man kann die Antikorrosionsschicht durch Zerstäuben des reinen Metalls und Beimischen der gewünschten Menge an Sauerstoff, Stickstoff oder Kohlenstoff zu dem Prozeßgas im geeigneten Zeitpunkt in der gewünschten Weise aufbauen, was auch als reaktive Kathodenzerstäubung bezeichnet wird.

Die erfindungsgemäßen, flächenförmigen, mehrschichtigen, magneto-optischen Aufzeichnungsmaterialien enthalten außerdem einen lichtdurchlässigen Träger und eine thermisch veränderbare, 10 bis 100 nm dicke Aufzeichnungsschicht aus einer amorphen Lanthanid-Übergangsmetall-Legierung, wobei sich die erfindungsgemäß anzuwendende Antikorrosionsschicht auf der dem Träger abgewandten Seite der Aufzeichnungsschicht befindet. Zwischen der erfindungsgemäßen Antikorrosionsschicht und der Aufzeichnungsschicht können weitere Schichten, wie übliche und bekannte Reflexionsschichten und/oder Interferenz-Schichten liegen. Ebenso können zwischen dem lichtdurchlässigen Träger und der Aufzeichnungsschicht weitere übliche und bekannte Interferenz-Schichten angeordnet sein.

Beispiele geeigneter lichtdurchlässiger Träger sind Folien, Platten oder Scheiben aus elektrisch nichtleitenden, optisch klaren Materialien wie Polyethylenterephthalat, Polycarbonat, Polymethylmethacrylat oder Glas, von denen die Scheiben bevorzugt sind. Die Oberfläche dieser Scheiben können strukturiert sein und beispielsweise Spurrillen enthalten. Üblicherweise liegt der Durchmesser solcher Scheiben bei 90 oder 130 mm.

Beispiele geeigneter amorpher Lanthanid-Übergangsmetall-Legierungen sind die üblichen und bekannten GdCe-, GdFe-, TbFe-, DyFe-, GdTbFe-, TbDyFe-, GdFeCo-, TbFeCo, GdTbFeCo- oder NdDyFeCo-Legierungen, welche noch weitere geeignete Bestandteile wie Bor, Phosphor, Titan, Antimon oder Wismut enthalten können.

Die Herstellung der erfindungsgemäßen Aufzeichnungsmaterialien kann nach den gleichen Techniken erfolgen, wie sie bei der Herstellung der Antikorrosionsschichten angewendet werden. Üblicherweise bringt man dabei die einzelnen Schichten des erfindungsgemäßen Aufzeichnungsmaterials in der gewünschten Reihenfolge, Menge und Dicke über die Gasphase auf den Träger auf und induziert danach in der Aufzeichnungsschicht eine definierte Magnetisierung, die senkrecht zur Schichtoberfläche orientiert ist.

Die Aufzeichnungsmaterialien können in der üblichen Weise von der Seite des lichtdurchlässigen Trägers her mit Hilfe eines impulskodierten, auf die Aufzeichnungsschicht fokussierten und senkrecht auf diese auftreffenden Schreiblaserstrahls einer Wellenlänge λ von kleiner als 1000 nm mit Daten in Form ummagnetisierter "spots" beschrieben werden. Hiernach können die Daten mit Hilfe eines auf die beschriebene Aufzeichnungsschicht fokussierten und senkrecht auf sie auftreffenden Dauerstrichlaserstrahls gelesen werden, wobei man das von der Aufzeichnungsschicht selbst oder das von den Reflexionsschichten reflektierte Licht erfaßt, analysiert und in Signale umwandelt. Im Falle der erfindungsgemäßen Datenplatten oder Disks können hierfür die üblichen und bekannten laseroptischen Plattenlaufwerke mit laseroptischen Köpfen, welche Halbleiterlaser enthalten, verwendet werden.

Die erfindungsgemäßen Aufzeichnungsmaterialien weisen gegenüber dem Stand der Technik besondere Vorteile auf. So haben sie eine höhere Empfindlichkeit als bekannte Aufzeichnungsmaterialien, weswegen sie mit geringerer Laserleistung beschrieben werden können. Erfindungsgemäße magneto-optische Datenplatten (Disks) können daher - bei gleicher Laserleistung - bei höheren Plattendrehzahlen beschrieben werden als bekannte Disks. Auch ihre Bitdichte ist gegenüber dem Stand der Technik deutlich erhöht. Beim Lesen liefern sie unverzerrte Signale und weisen ein Signal-Rausch-Verhältnis von mehr als 55 dB auf. Selbst nach einer Lagerzeit von mehr als 1000 Stunden bei 70°C und einer relativen Luftfeuchtigkeit von 90 % kommt es nicht zu einer Erhöhung der Bitfehlerrate ("bit error rate") d.h. es tritt kein Informationsverlust auf. Die Aufzeichnungsmaterialien weisen eine kratzfeste, harte, haftfeste und mechanisch feste Antikorrosionsschicht auf, welche nicht spröde ist und die luft- und wasserempfindlichen Aufzeichnungsschichten hervorragend abschirmt. Überdies können die Antikorrosionsschichten hinsichtlich ihrer optischen und mechanischen Eigenschaften sowie ihren Haftungseigenschaften in hervorragender Weise den übrigen Schichten angepaßt werden.

Beispiele

Beispiele 1 bis 4

Herstellung und Eigenschaften erfindungsgemäßer magneto-optischer Datenplatten mit mehrlagigen Antikorrosionsschichten

Auf vier, 130 mm durchmessende Polycarbonatscheiben mit Spurrillen wurden unter Drehen der Scheiben die einzelnen Schichten in der gewünschten Reihenfolge und Dicke aus der Gasphase aufgebracht. Dabei erfolgte das Abscheiden der Antikorrosionsschichten durch Kathodenzerstäubung des betreffenden Metalls und der Beimengung von Kohlenstoff, Sauerstoff und/oder Stickstoff über die Gasphase. Hierbei wurden die Bedingungen so gewählt, daß sich die in der Tabelle 1 angegebenen Zusammensetzungen der Antikorrosionsschichten ergaben. Bei den Beispielen 1 und 4 wurde die oberste Lage (Aluminiumoxid) durch Luftoxidation der Aluminiumlage erzeugt. Die Tabelle 1 gibt Auskunft über den Aufbau der hergestellten Datenplatten.

Die Aufzeichnungsschichten der in dieser Weise erhaltenen Datenplatten wurden senkrecht zur ihrer Oberfläche magnetisiert und mit Hilfe eines üblichen und bekannten laseroptischen Plattenlaufwerks mit Daten beschrieben. Dabei verwendete man einen impulskodierten GaAlAs-Halbleiterlaser, welcher linear polarisiertes Licht der Wellenlänge $\lambda$ = 830 nm emittierte. Sowohl die Bitlänge, d.h. der "spot"-Durchmesser, als auch der Bitabstand, d.h. der Abstand von "spot" zu "spot", lagen bei etwa 1 $\mu$m.

Für das Lesen der eingeschriebenen Daten über den Kerr-Effekt (Beispiele 1 und 2) oder über den Faraday-Effekt (Beispiel 3 und 4) verwendete man den GaAlAs-Halbleiterlaser in Dauerstrich-Betrieb mit einer Lichtleistung von kleiner als 1 mW. Die unkorrigierte Bitfehlerrate wurde in üblicher und bekannter Weise mittels eines Zeitintervallanalysators ("time interval analyzer", TIA) bestimmt. Die Datenplatten wurden unmittelbar nach dem Beschreiben gelesen (1. Lesen), anschließend 1000 Stunden bei 70°C und einer relativen Luftfeuchtigkeit von 90 % gelagert, und dann erneut gelesen (2. Lesen). Die betreffenden Ergebnisse finden sich in der Tabelle 2.

Vergleichsversuche A und B

Herstellung und Eigenschaften bekannter Aufzeichnungsmaterialien

Nach der bei den Beispielen 1 bis 4 angegebenen Vorschrift wurden zwei Datenplatten hergestellt, welche in Aufbau und Zusammensetzung den aus der DE-A-33 35 689 bekannten Proben A-2 und B-5 glichen. Der Aufbau der Vergleichsplatten wird in der Tabelle 1 dem Aufbau der erfindungsgemäßen Datenplatten gegenübergestellt.

Die bekannten Datenplatten wurden, wie bei den Beispielen 1 bis 4 beschrieben, magnetisiert, mit Daten beschrieben, gelesen und getestet. Die dabei erhaltenen Versuchsergebnisse werden in der Tabelle 2 mit den Werten aus den Beispielen 1 bis 4 verglichen.

Der Vergleich zeigt, daß die Aufzeichnungsmaterialien bekannter Zusammensetzung der erfindungsgemäßen Aufzeichnungsmaterialien hinsichtlich der der Lagerstabilität unterlegen waren, was sich an der deutlich erhöhten Bitfehlerrate der bekannten Aufzeichnungsmaterialien bemerkbar machte.

Tabelle 1: Aufbau und Zusammensetzung erfindungsgemäßer und nicht erfindungsgemäßer Datenplatten

| Beispiel | Interferenzschicht 1 (auf dem Träger) (nm) | Aufzeichnungsschicht (nm) | Interferenzschicht 2 (auf der Aufzeichnungsschicht) (nm) | Reflexionsschicht (nm) | Antikorrosionsschicht: Lagen | | | | | Übergangszonen (nm) | Gesamtdicke (nm) |
|---|---|---|---|---|---|---|---|---|---|---|---|
| | | | | | 1 (nm) | 2 (nm) | 3 (nm) | 4 (nm) | 5 (nm) | | |
| 1 | SiO (80) | TbDyFe (80) | --- | --- | Al (20) | AlN (20) | Al (20) | $Al_2O_3$ (10) | --- | (5) | (70) |
| 2 | SiO (80) | TbDyFe (90) | --- | --- | $Al_2O_3$ (20) | Al (20) | AlC (20) | Al (10) | $Al_2O_3$ (10) | (8) | (80) |
| 3 | SiO (80) | TbDyFe (25) | AlN (100) | Al (500) | SiN (20) | SiC (20) | Si (10) | $SiO_2$ (20) | --- | (5) | (70) |
| 4 | SiO (80) | TbDyFe (20) | AlN (300) | Al (500) | TiN (20) | $TiO_2$ (20) | Ti (20) | $TiO_2$ (20) | --- | (5) | (80) |
| Vergleichsversuch | | | | | | | | | | | |
| A | | TbDyFe (60) | $TiO_2$ (200) | --- | $Al_2O_3$ (300) | --- | --- | --- | --- | | (300) |
| B | | TbDyFe (25) | $CeO_2$ (100) | Al (500) | CrN (300) | --- | --- | --- | --- | | (300) |

EP 0 291 847 B1

EP 0 291 847 B1

Tabelle 2: Versuchsergebnisse

| Beispiel | Bitfehlerrate (unkorrigiert) | |
|---|---|---|
| | 1. Lesen | 2. Lesen |
| 1 | $10^{-5}$ | $10^{-5}$ |
| 2 | $10^{-5}$ | $10^{-5}$ |
| 3 | $10^{-5}$ | $10^{-5}$ |
| 4 | $10^{-5}$ | $10^{-5}$ |
| Vergleichs-versuch | | |
| A | $10^{-5}$ | $2 \times 10^{-4}$ |
| B | $10^{-5}$ | $6 \times 10^{-4}$ |

**Patentansprüche**

1. Flächenförmiges, mehrschichtiges, magneto-optisches Aufzeichnungsmaterial, welches einen lichtdurchlässigen Träger, eine thermisch veränderbare Aufzeichnungsschicht aus einer amorphen Lanthanid-Übergangsmetall-Legierung und auf der dem Träger abgewandten Seite dieser Aufzeichnungsschicht eine Antikorrosionsschicht aufweist, die
   a) 30 bis 250 nm dick ist und
   b) aus zwei oder mehr Komponenten besteht, welche
   c) in vier oder mehr separaten Lagen aus jeweils einer der Komponenten vorliegen, wobei
   d) mindestens eine der Komponenten aus der Gruppe der Elemente Bor, Aluminium, Silizium, Titan, Zirkon, Hafnium, Vanadin, Niob, Tantal, Chrom, Molybdän und Wolfram und
   e) mindestens eine andere der Komponenten aus der Gruppe der Carbide, Nitride und Oxide dieser Elemente (d) ausgewählt wird und wobei
   f) direkt benachbarte Lagen stets aus voneinander verschiedenen Komponenten bestehen und sich zwischen den Lagen eine Übergangzone befindet, in der sich die Zusammensetzung der einen Lage allmählich in die Zusammensetzung der anderen Lage ändert.

2. Aufzeichnungsmaterial nach Anspruch 1, dadurch gekennzeichnet, daß die separaten Lagen der Antikorrosionsschicht von etwa gleicher Dicke sind.

3. Aufzeichnungsmaterial nach Anspruch 1 oder 2, dadurch gekennzeichnet, daß die oberste Lage der Antikorrosionsschicht eine Oxidschicht ist.

4. Aufzeichnungsmaterial nach einem der Ansprüche 1 bis 3, dadurch gekennzeichnet, daß man als Komponente (d) ein einziges Element und als Komponente (e) die Carbide, Nitride und/oder Oxide dieses Elements verwendet.

5. Aufzeichnungsmaterial nach einem der Ansprüche 1 bis 4, dadurch gekennzeichnet, daß die Antikorrosionsschicht aus drei Komponenten besteht, welche in vier oder fünf separaten Lagen vorliegen, wobei eine der Komponenten aus der Gruppe Aluminium, Silizium und Titan ausgewählt wird und die beiden anderen Komponenten aus der Gruppe Bor-, Aluminium-, Silizium- und Titancarbid, Bor-, Aluminium-,

8

Silizium- und Titannitrid sowie Aluminium-, Silizium- und Titanoxid ausgewählt werden.

6. Aufzeichnungsmaterial nach Ansprüch 5, dadurch gekennzeichnet, daß man mindestens eine Komponente aus der Gruppe Aluminium-, Silizium- und Titanoxid verwendet.

**Claims**

1. A sheet-like, multilayer, magneto-optical recording material which has a base which is transparent to light, a thermally alterable recording layer of an amorphous lanthanide transition metal alloy and, on the base remote side of this recording layer, an anti-corrosion layer, which

    a) is from 30 to 250 nm thick and

    b) consists of two or more components which

    c) are present in four or more separate strata, each consisting of one of the components,

    d) one or more of the components being selected from the group consisting of the elements boron, aluminum, silicon, titanium, zirconium, hafnium, vanadium, niobium, tantalum, chromium, molybdenum and tungsten and

    e) one or more of the other components being selected from the group consisting of the carbides, nitrides and oxides of these elements (d) and

    f) directly adjacent strata always consisting of components which differ from one another, and a transition zone in which the composition of one stratum gradually changes into the composition of the other stratum being present between the strata.

2. A recording material as claimed in claim 1, wherein the separate strata of the anticorrosion layer have about the same thickness.

3. A recording material as claimed in claim 1 or 2, wherein the uppermost stratum of the anticorrosion layer is an oxide layer.

4. A recording material as claimed in any of claims 1 to 3, wherein a single element is used as component (d) and the carbides, nitrides and/or oxides of this element are used as component (e).

5. A recording material as claimed in any of claims 1 to 4, wherein the anticorrosion layer consists of three components which are present in four or five separate strata, one of the components being selected from the group consisting of aluminum, silicon and titanium and the two other components being selected from the group consisting of boron carbide, aluminum carbide, silicon carbide and titanium carbide, boron nitride, aluminum nitride, silicon nitride and titanium nitride and alumina, silica and titanium oxide.

6. A recording material as claimed in claim 5, wherein one or more components from the group consisting of alumina, silica and titanium oxide are used.

**Revendications**

1. Matériau d'enregistrement magnéto-optique planiforme à couches multiples comprenant un support transparent, une couche d'enregistrement transformable sous l'action de la chaleur et consistant en un alliage amorphe lanthanide-métal de transition et, sur la face de cette couche d'enregistrement opposée au support, une couche anti-corrosion

    a) épaisse de 30 à 250 nm, et

    b) consistant en deux ou plusieurs composants qui

    c) sont présents en 4 strates séparées ou plus consistant chacune en l'un des composants,

    d) au moins un des composants étant choisi dans le groupe des éléments bore, aluminium, silicium, titane, zirnonium, hafnium, vanadium, niobium, tantale, chrome, molybdène et tungstène, et

    e) au moins un autre des composants est choisi dans le groupe des carbures, des nitrures et des oxydes de ces éléments (d), et

    f) les strates directement voisines consistant toujours en composants différents avec, entre les strates, une zone de transition dans laquelle la composition varie peu à peu de la composition d'une strate à la composition de l'autre strate.

**2.** Matériau d'enregistrement selon la revendication 1, caractérisé en ce que les strates séparées de la couche anti-corrosion ont à peu près la même épaisseur.

**3.** Matériau d'enregistrement selon la revendication 1 ou 2, caractérisé en ce que la strate supérieure de la couche anti-corrosion consiste en une couche d'oxyde.

**4.** Matériau d'enregistrement selon une des revendications 1 à 3, caractérisé en ce que le composant (d) consiste en un élément unique et le composant (e) consiste en carbure, nitrure et/ou oxyde de cet élément.>

**5.** Matériau d'enregistrement selon une des revendications 1 à 4, caractérisé en ce que la couche anti-corrosion consiste en trois composants disposés en 4 ou 5 strates séparées, l'un des composants étant choisi dans le groupe de l'aluminium, du silicium et du titane et les deux autres composants dans le groupe des carbures de bore, d'aluminium, de silicium, et de titane, des nitrures de bore, d'aluminium, de silicium et de titane et des oxydes d'aluminium, de silicium et de titane.

**6.** Matériau d'enregistrement selon la revendication 5, caractérisé en ce que l'on utilise au moins un composant du groupe des oxydes d'aluminiu, de silicium et de titane.